# EUROPEAN PATENT APPLICATION

(11) **EP 2 003 907 A1**
(43) Date of publication of application: **17.12.2008**
(21) Application number: 06843139.4
(22) Date of filing: 25.12.2006
(51) Int. Cl.: H04Q 7/20, H04B 7/26, H04M 11/00

(54) **MOBILE TELEPHONE SYSTEM, RADIO BASE STATION APPARATUS, INFORMATION TERMINAL, AND SERVICE INFORMATION PROVIDING METHOD**

(30) Priority: 31.03.2006 JP 2006099076
(71) Applicant: NEC Corporation, Minato-ku Tokyo 108-8001 (JP)
(72) Inventor: ISHII, Tatsuya, Tokyo 108-8001 (JP)
(74) Representative: Baronetzky, Klaus
(86) International application number: PCT/JP2006/325735
(87) International publication number: WO 2007/116570

(57) **Abstract**

A mobile phone system of the present invention comprises mobile phone terminal (10), wireless base station device (20), mobile phone network (30), and base station information terminal (40). Base station information terminal (40) transmits service information specific to a particular area covered by wireless base station device (20) to wireless base station device (20). Wireless base station device (20) distributes the service information received from base station information terminal (40) to all mobile phone terminals (10) located in the particular area covered by wireless base station device (20) by using a wireless common channel.

## Description

### Technical Field

The present invention relates to a mobile phone system, a wireless base station device, an information terminal, and a service information providing method.

### Background Art

In recent years, the area coverage of the mobile phone system is in a saturated state, covering most areas except inside a room, underground, and the like. Thus, recently, compact wireless base station devices are often installed inside a room, underground, and the like that have not been previously covered.

The compact wireless base station device is characterized by covering only a small particular area inside the room, underground, or the like. Specifically, the compact wireless base station device is characterized by covering one floor of a building, a part of underground, or the like.

Therefore, it can be specified that a user, who is wirelessly communicating in the particular area covered by the compact wireless base station device, is at some place within the particular area. Thus, highly convenient and profitable services can be provided to the user in the particular area if service information specific to the particular area can be provided.

However, a related wireless base station device was terminated with a physical channel of a wireless line. The wireless base station device only transferred a reception signal received from a mobile phone terminal through the wireless line to a wired line to transmit the reception signal to a higher mobile phone network or transferred a reception signal received from the higher mobile phone network through the wired line to the wireless line to transmit the reception signal to the mobile phone terminal (See Patent Document 1).

Thus, the related wireless base station device only simply forwarded a signal exchanged between a mobile phone terminal and a mobile phone network. Therefore, the related wireless base station device could not distribute service information specific to the particular area covered by the wireless base station device to the user in the particular area.
Patent Document 1: Japanese Patent Laid-Open No. 2005-294879

### Disclosure of the Invention

An object of the present invention is to provide a mobile phone system, a wireless base station device, an information terminal, and a service information providing method capable of distributing service information specific to a particular area covered by a wireless base station device to a user in the particular area.

To attain the object, the present invention provides
a mobile phone system comprising a wireless base station device and a mobile phone terminal that wirelessly communicates in a particular area covered by the wireless base station device, the mobile phone system characterized by further comprising
an information terminal that is connected to the wireless base station device and that transmits service information specific to the particular area covered by the wireless base station device to the wireless base station device, wherein
the wireless base station device, receiving the service information from the information terminal, wirelessly distributes the service information to all mobile phone terminals located in the particular area covered by the wireless base station device.

According to the configuration, an information terminal that transmits service information specific to a particular area covered by a wireless base station device to the wireless base station device is installed, and the wireless base station device distributes the service information received from the information terminal to all mobile phone terminals located in the particular area covered by the wireless base station device.

Therefore, the information terminal can distribute the service information specific to the particular area covered by the wireless base station device to all mobile phone terminals located in the particular area covered by the wireless base station device through the wireless base station device.

The wireless base station device may also distribute the service information using a wireless common channel.

According to the configuration, the load required for the process of distributing the service information is reduced by using individual channels individually allocated to the mobile phone terminals as compared to when individually distributing the service information to the mobile phone terminals.

### Brief Description of the Drawings

Figure 1 is a diagram describing the concept of a mobile phone system of an exemplary embodiment of the present invention;
Figure 2 is a block diagram showing a detailed configuration of the mobile phone system shown in Figure 1;
Figure 3 is a flow chart describing an example of an operation of the mobile phone system shown in Figure 1;
Figure 4 is a flow chart describing another example of an operation of the mobile phone system shown in Figure 1; and
Figure 5 is a flow chart describing still another example of an operation of the mobile phone system shown in Figure 1.

### Best Mode for Carrying Out the Invention

The best mode for carrying out the present invention will now be described with reference to the drawings. Like constituent elements are designated with like reference numerals throughout the drawings described below, and the description is appropriately omitted.

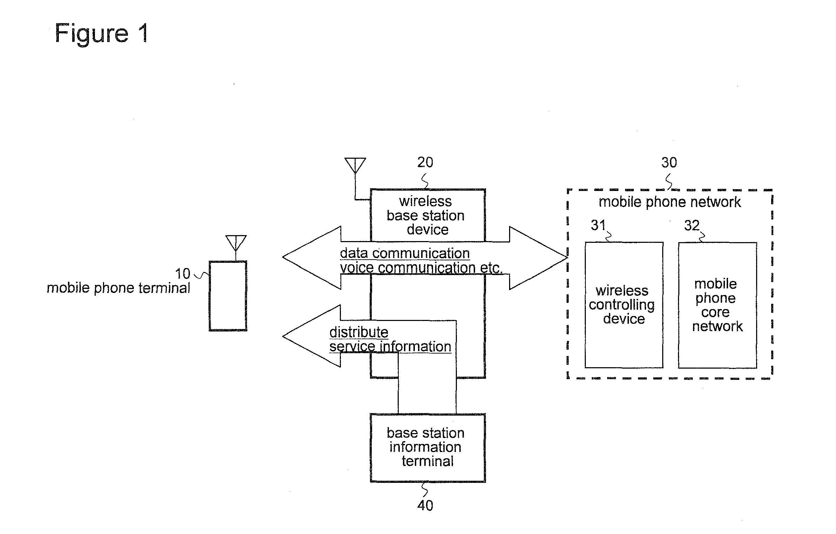

Figure 1 is a diagram describing the concept of a mobile phone system of an exemplary embodiment of the present invention.

With reference to Figure 1, the mobile phone system of the present exemplary embodiment comprises mobile phone terminal 10, wireless base station device 20, mobile phone network 30 including wireless controlling device 31, mobile phone core network 32, and the like, and base station information terminal 40. Although only one mobile phone terminal 10 is illustrated in Figure 1, there is no particular limit to the number of mobile phone terminals 10 as long as the number is one or more.

Mobile phone terminal 10 wirelessly communicates with wireless base station device 20 in a particular area covered by wireless base station device 20.

Furthermore, in the particular area covered by wireless base station device 20, mobile phone terminal 10 receives data communication services and voice communication services provided by mobile phone network 30 to perform data communication and voice communication with mobile phone network 30 through wireless base station device 20.

The above operation performed between mobile phone terminal 10 and wireless base station device 20 as well as mobile phone network 30 is a conventional operation. Therefore, a detailed description will be omitted.

The present exemplary embodiment is characterized in that base station information terminal 40 is additionally connected to wireless base station device 20 and base station information terminal 40 distributes service information specific to the particular area covered by wireless base station device 20 to mobile phone terminal 10 through wireless base station device 20.

Specifically, base station information terminal 40 transmits the service information specific to the particular area covered by wireless base station device 20 and a request for distributing the service information to mobile phone terminal 10 to wireless base station device 20. The service information specific to the particular area is information about cafes, restaurants, offices, and the like within the particular area, or information such as timetables of stations if the particular area is in a subway station. The service information is not limited to the illustrated information, but may be any information related to the particular area.

Receiving the service information and the distribution request of the service information from base station information terminal 40, wireless base station device 20 wirelessly distributes the service information received from base station information terminal 40 to all mobile phone terminals 10 located in the particular area covered by wireless base station device 20 by using a wireless physical channel. In this case, wireless base station device 20 uses a wireless common channel so that all mobile phone terminals 10 can receive the service information. Part of an existing wireless common channel may be used, or a new wireless common channel may be added.

Base station information terminal 40 may periodically transmit the service information to wireless base station device 20, and wireless base station device 20 may periodically transmit the service information to mobile phone terminal 10. Alternatively, base station information terminal 40 may transmit updated service information to wireless base station device 20 only when the service information is updated, and wireless base station device 20 may transmit the received service information to mobile phone terminal 10 only when receiving the service information from base station information terminal 40.

Receiving the service information from wireless base station device 20, mobile phone terminal 10 displays the service information on a display unit such as a display. Mobile phone terminal 10 may mandatorily display the service information when receiving the service information, or the user may determine whether or not to display the service information.

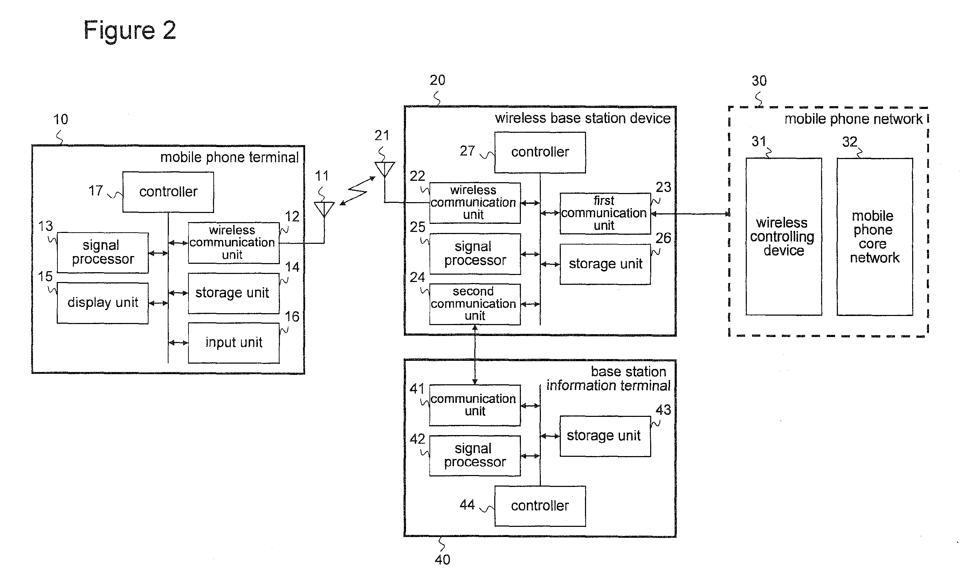

Figure 2 is a block diagram showing a detailed configuration of the mobile phone system shown in Figure 1.

With reference to Figure 2, mobile phone terminal 10 comprises antenna 11, wireless communication unit 12, signal processor 13, storage unit 14, display unit 15, input unit 16, and controller 17.

Wireless communication unit 12 is arranged on a wireless interface part with wireless base station device 20 and wirelessly communicates with wireless base station device 20 using antenna 11.

Signal processor 13 executes various signal processing such as diffusion and modulation or encoding of a wireless transmission signal, or back-diffusion and modulation or decoding of a wireless reception signal.

Storage unit 14 is a memory that stores various information such as service information specific to wireless base station device 20 received as a wireless reception signal from wireless base station device 20.

Display unit 15 is a display for displaying various information such as the service information received from wireless base station device 20.

Input unit 16 is a key for a user to input various instructions.

Controller 17 controls the constituent elements in mobile phone terminal 10.

Wireless base station device 20 comprises antenna 21, wireless communication unit 22, first communication unit 23, second communication unit 24, signal processor 25, storage unit 26, and controller 27.

Wireless communication unit 22 is arranged on a wireless interface part with mobile phone terminal 10 and wirelessly communicates with mobile phone terminal 10 using antenna 21.

First communication unit 23 is arranged on an interface part with mobile phone network 30 and transmits and receives data or voice that are communicated between mobile phone network 30 and mobile phone terminal 10.

Second communication unit 24 is arranged on an interface part with base station information terminal 40 and receives the service information specific to wireless base station device 20 as a wireless reception signal from base station information terminal 40.

Signal processor 25 executes various signal processing such as diffusion and modulation or encoding of a wireless transmission signal, or back-diffusion and modulation or decoding of a wireless reception signal.

Storage unit 26 is memory that stores various information such as the service information received from base station information terminal 40.

Controller 27 controls the constituent elements in wireless base station device 20.

Base station information terminal 40 comprises communication unit 41, signal processor 42, storage unit 43, and controller 44.

Communication unit 41 is arranged on an interface part with wireless base station device 20 and transmits the service information specific to wireless base station device 20 to wireless base station device 20.

Signal processor 42 executes various signal processing such as encoding of various information such as service information to be transmitted to wireless base station device 20.

Storage unit 43 is a memory that stores various information such as service information to be transmitted to wireless base station device 20.

Controller 44 controls the constituent elements in base station information terminal 40.

An operation of the mobile phone system of the present exemplary embodiment shown in Figure 1 will now be described.

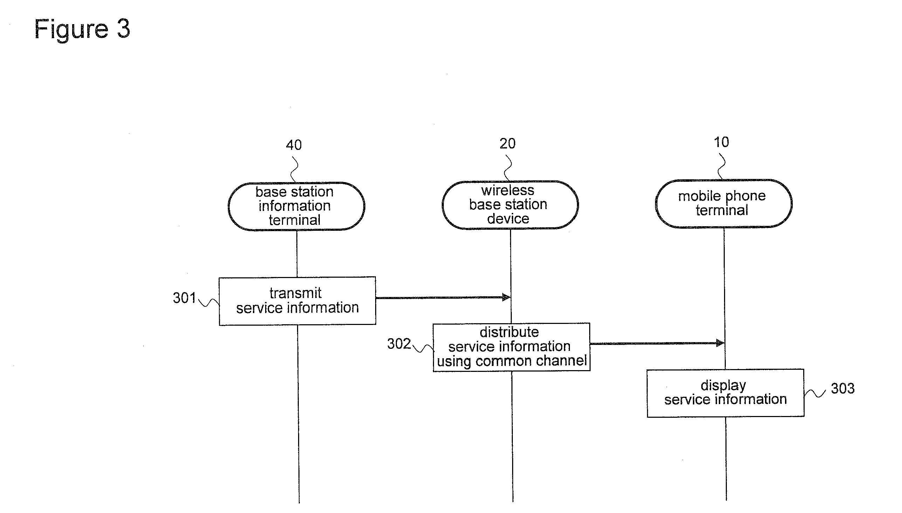

Figure 3 is a flow chart describing an example of an operation of the mobile phone system shown in Figure 1.

With reference to Figure 3, in base station information terminal 40, communication unit 41 transmits the service information specific to the particular area covered by wireless base station device 20 and the request for distributing the service information to mobile phone terminal 10 to wireless base station device 20 in step 301.

In wireless base station device 20, once second communication unit 24 receives the service information and the distribution request from base station information terminal 40, wireless communication unit 22 distributes the service information to all mobile phone terminals 10 located in the particular area covered by wireless base station device 20 by using a wireless common channel in step 302.

In mobile phone terminal 10, once wireless communication unit 12 receives the service information from wireless base station device 20, signal processor 13 executes signal processing such as decoding of the service information, and display unit 13 displays the service information signal-processed by signal processor 13 in step 303.

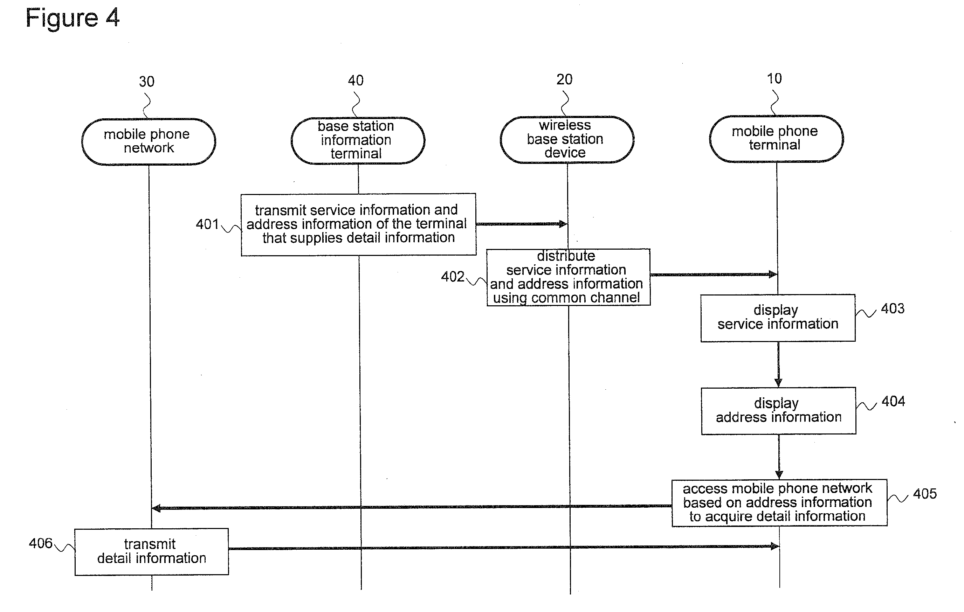

Figure 4 is a flow chart describing another example of an operation of the mobile phone system shown in Figure 1.

With reference to Figure 4, in base station information terminal 40, communication unit 41 transmits service information and a distribution request similar to the ones in Figure 3 as well as address information of a device that supplies further detail information concerning the service information to wireless base station 20 in step 401. In Figure 4, it is assumed that the device of the supplier of the detail information is on mobile phone network 30.

In wireless base station device 20, once second communication unit 24 receives the service information, the distribution request, and the address information from base station information terminal 40, wireless communication unit 22 distributes the service information and the address information to all mobile phone terminals 10 located in the particular area covered by wireless base station device 20 by using a wireless common channel in step 402.

In mobile phone terminal 10, once wireless communication unit 12 receives the service information and the address information from wireless base station device 20, signal processor 13 executes signal processing such as decoding of the service information, and display unit 13 displays the signal-processed service information in step 403.

Furthermore, in mobile phone terminal 10, signal processor 13 executes signal processing such as decoding of the address information, and display unit 13 displays the address information signal-processed by signal processor 13 in step 404. Once the user clicks the display part of the address through input unit 16, wireless communication unit 12 accesses the device that supplies detail information on mobile phone network 30 through wireless base station device 20 based on the address information in step 405.

In response to this, the device that supplies detail information on mobile phone network 30 transmits the detail information to mobile phone terminal 10 through wireless base station device 20 in step 406.

The processes of steps 405 and 406 can be realized using a conventional network access process from mobile phone terminal 10.

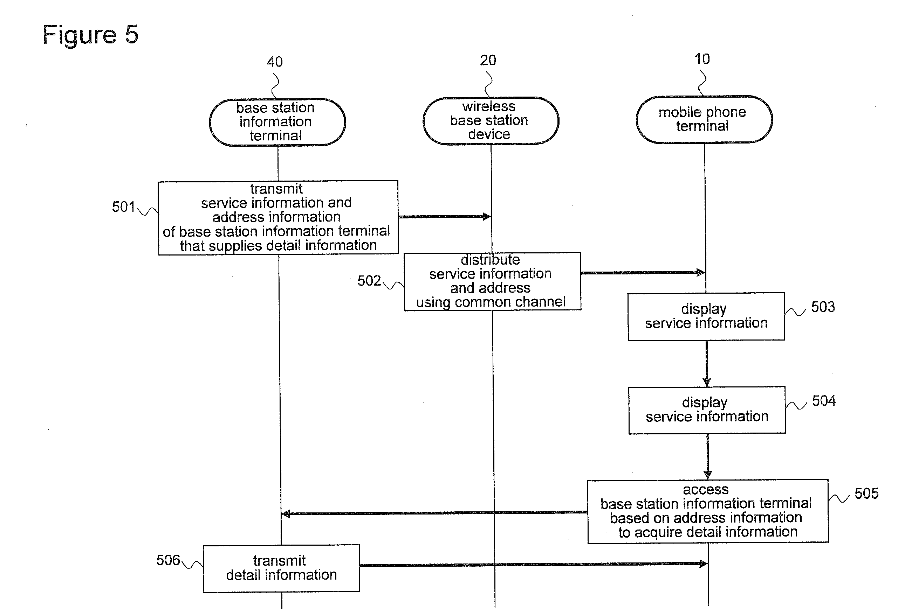

Figure 5 is a flow chart describing still another example of an operation of the mobile phone system shown in Figure 1.

With reference to Figure 5, in base station information terminal 40, communication unit 41 transmits service information and a distribution request similar to the ones in Figure 3 as well as address information of a device that supplies further detail information concerning the service information to wireless base station device 20 in step 501. In Figure 5, it is assumed that the device that supplies detail information is base station information terminal 40 itself, and the detail information is stored in storage unit 43 of base station information terminal 40.

In wireless base station device 20, once second communication unit 24 receives the service information, the distribution request, and the address information from base station information terminal 40, wireless communication unit 22 distributes the service information and the address information to all mobile phone terminals 10 located in the particular area covered by wireless base station device 20 by using a wireless common channel in step 502.

In mobile phone terminal 10, once wireless communication unit 12 receives the service information and the address information from wireless base station device 20, signal processor 13 executes signal processing such as decoding of the service information, and display unit 13 displays the service information that was signal-processed in step 503.

Furthermore, in mobile phone terminal 10, signal processor 13 executes signal processing such as decoding of the address information, and display unit 13 displays the address information that was signal-processed by signal processor 13 in step 504. Once the user clicks the display part of the address through input unit 16, wireless communication unit 12 accesses base station information terminal 40 that supplies detail information through wireless base station device 20 based on the address information in step 505.

In response to this, in base station information terminal 40, communication unit 41 transmits the detail information stored in storage unit 43 to mobile phone terminal 10 through wireless base station device 20 in step 506.

The processes of steps 505 and 506 can be realized using a process for conventional network access from mobile phone terminal 10.

As described, in the present exemplary embodiment, base station information terminal 40 transmits the service information specific to the particular area covered by wireless base station device 20 to wireless base station device 20, and wireless base station device 20 distributes the service information received from base station information terminal 40 to all mobile phone terminals 10 located in the particular area covered by wireless base station device 20.

Therefore, base station information terminal 40 can distribute the service information specific to the particular area covered by wireless base station device 20 to all mobile phone terminals 10 located in the particular area covered by wireless base station device 20 through wireless base station device 20.

As a result, a service information provider who provides the service information using base station information terminal 40, a system administrator of the present mobile phone system, and a user who is provided with the service information in the particular area can obtain the following advantages respectively.

### (1) Advantage for the service information provider

The service information provider can conduct effective promotional activities and provide services to the users in the particular area. The service information provider can further transmit timely service information and provide services if the service information can be edited on base station information terminal 40.

### (2) Advantage for the system administrator

The system administrator can secure a new revenue source by lending base station information terminal 40 to a service information provider. The data traffic of users may also increase, which may lead to an increase in sales. The number of users of the present mobile phone system may also increase.

### (3) Advantage for the user

The user in the particular area can efficiently and effectively acquire interested service information.

## Claims

1. A mobile phone system comprising a wireless base station device and a mobile phone terminal that wirelessly communicates in a particular area covered by the wireless base station device, the mobile phone system **characterized by** further comprising
an information terminal that is connected to the wireless base station device and that transmits service information specific to the particular area covered by the wireless base station device to the wireless base station device, wherein
the wireless base station device, receiving the service information from the information terminal, wirelessly distributes the service information to all mobile phone terminals located in the particular area covered by the wireless base station device.

2. The mobile phone system according to claim 1 **characterized in that** the wireless base station device distributes the service information using a wireless common channel.

3. A wireless base station device **characterized by** comprising:
means for receiving service information specific to a particular area covered by a wireless base station device from outside; and
wireless communicating means for wirelessly distributing the service information to all mobile phone terminals located in the particular area covered by the wireless base station device after receiving the service information.

4. The wireless base station device according to claim 3, **characterized in that** the wireless communicating means distributes the service information using a wireless common channel.

5. An information terminal **characterized by** comprising:
storage means for storing service information specific to a particular area covered by a wireless base station device; and
means for transmitting the service information and a request for distributing the service information to a mobile phone terminal to the wireless base station device.

6. A service information providing method of providing service information to a mobile phone terminal that wirelessly communicates in a particular area covered by a wireless base station device, the service information providing method **characterized by** comprising:
transmitting, by an information terminal connected to the wireless base station device, the service information specific to the particular area covered by the wireless base station device to the wireless station device; and
distributing wirelessly, by the wireless base station device, the service information to all mobile phone terminals located in the particular area covered by the wireless base station device after receiving the service information from the information terminal.

7. The service information providing method according to claim 6, **characterized in that** the wireless base station device distributes the service information using a wireless common channel.
